# EUROPEAN PATENT SPECIFICATION

(11) **EP 0 402 037 B1**
(45) Date of publication and mention of the grant of the patent: **20.07.1994**
(21) Application number: 90305914.5
(22) Date of filing: 31.05.1990
(51) Int. Cl.: G11B 23/03, G11B 23/033

(54) **Disk Cartridge**
Plattenkassette
Cartouche de disque

(30) Priority: 05.06.1989 JP 142562/89
(43) Date of publication of application: 12.12.1990
(73) Proprietor: SONY CORPORATION, Tokyo (JP)
(72) Inventor: Takahashi, Kenji, c/o Sony Magnetic Products Inc., Shinagawa-ku, Tokyo (JP)
(74) Representative: Ayers, Martyn Lewis Stanley

(56) References cited:
- DE-A- 3 800 123
- US-A- 4 853 817

## Description

This invention relates to a disk cartridge accommodating a disk-shaped recording medium such as an optical disk or a magneto-optical disk.

A disk cartridge comprising a disk-shaped recording medium, such as an optical disk or a magneto-optical disk, rotatably accommodated in the main body of a cartridge which comprises an upper half and a lower half abutted and connected to each other. For reading or writing data from or to the recording medium, the disk cartridge is mounted in a cartridge mounting section of a recording/reproducing apparatus, with the disk-shaped recording medium accommodated in the main cartridge body.

The main cartridge body has signal writing and reading openings allowing signal writing and reading means, such as an optical pickup unit, access to the signal recording surface of the disk-shaped recording medium, and a central opening through which the disk-shaped recording medium may be rotated by a drive means.

If the signal writing and reading opening remains open when the cartridge is not in use, dust and dirt may enter the main body of the cartridge and stick to the signal recording surface. Contamination or dust and dirt on the signal recording surface of the disk-shaped recording medium may cause data dropout during data writing or reading, and writing or reading of data may become impossible.

In order to prevent such a situation from occurring, a shutter is provided on the main body of the cartridge to close the signal writing reading openings and the central opening when the disk cartridge is not mounted in position in the recording/reproducing apparatus. The shutter is opened when the disk cartridge is mounted in position in the recording/ reproducing apparatus.

When the disk cartridge is not mounted in position in the recording/reproducing apparatus, the shutter is biased by a biasing such as a torsion with spring means to close the signal writing and reading openings. The torsion coil spring is mounted within the cartridge main with the end of one arm section of the torsion coil spring extending from its coil section retain by a retainer in the cartridge main body and the end of the other arm section extending from the coil section retained by a retainer on the shutter. The torsion coil spring biases the shutter toward the closed position.

The torsion coil spring is introduced into the main body of the cartridge after the shutter is mounted in position on the main body of the cartridge. The torsion coil spring is inserted into the cartridge through an insertion opening which is provided in the front of the cartridge.

To insert the torsion coil spring into the cartridge main body, the end of one arm section is retained by a retainer in the cartridge main body and the other arm section is flexed manually to open out the arm section. The torsion coil spring is then introduced into the cartridge main body in this state and the other arm section is released so that the other arm section moves towards the shutter under the resilient restoring force of the torsion coil spring, until the end of the other arm section is retained by the retainer formed in the shutter.

In this manner, the shutter is biased toward the closed position.

A disk cartridge in which the shutter is biased by a torsion coil spring toward the open position is disclosed in USP 4550354 and the corresponding Japanese patent publication number 62-2381 (1986).

In this cartridge the torsion coil spring is inserted into the main cartridge body with its arm sections flexed manually so that they are closed. When the torsion coil spring is inserted as far as a predetermined position within the main body of the cartridge, the other arm section is released so that it moves under the resilient restoring force of the torsion coil spring until it is retained by the retainer provided in the shutter.

To engage accurately the other arm section in the retainer provided in the shutter, it is necessary to control accurately the insertion angle of the torsion coil spring into the cartridge main body and the position at which the other arm section is released.

However, since the torsion coil spring is inserted into the cartridge main body in a resiliently flexed state, it is difficult to control accurately the insertion angle and the position at which the other arm section is released cannot be controlled accurately. As a result, it is extremely difficult to engage positively the other arm section in the retainer provided in the shutter.

A disk cartridge in which the insertion of the torsion coil spring into the cartridge main body is facilitated and the arm sections of the torsion coil spring may be positively retained between the retainers of the cartridge main body and the shutter, is disclosed in the Japanese utility model publication 59-177073 (1984).

Another disk cartridge having the precharacterising features of claim 1 is disclosed in DE-A-3 800 123.

It is noted that, a disk cartridge accommodating a disk shaped recording medium with its substrate formed of synthetic resin or glass of a particular toughness, has a thicker main body. As a result, the space in the cartridge main body in which the torsion coil spring can be stored is of a greater height than the coil section of the torsion coil spring, so that it becomes more and more difficult to accurate control the position of the torsion coil spring. If the insertion position of the torsion coil spring cannot be controlled correctly, its two arm sections cannot be retained positively by the retainers of the main body of the cartridge and the shutter, so that the shutter cannot be biased toward the open or closed positions.

It is therefore an aim of the present invention to provide a disk cartridge in which the movement of the arm section of the torsion coil spring under the resilient restorative force of the torsion coil spring may be accurately controlled along the height and along the major surface of the main cartridge body to assure positive engagement of the arm section with the retainer provided in the shutter.

It is another aim of the present invention to provide a disk cartridge in which the torsion coil spring can be mounted easily and positively both manually and with the aid of an automatic mounting system.

In accordance with the present invention, there is provided a disk cartridge in which the movement of the arm section of the torsion coil spring under the resilient restorative force of the torsion coil spring may be accurately controlled along the height and along the major surface of the main cartridge body to assure positive engagement of the arm section with the retainer provided in the shutter.

It is another object of the present invention to provide a disk cartridge in which the torsion coil spring can be mounted easily and positively both by the manual operation and with the aid of an automatic mounting system.

In accordance with the present invention, there is provided a disk cartridge comprising:
a main body including an upper half and a lower half, said halves each having a major surface and one of the halves having a recess at least partially along its front edge, said main body having a disk shaped recording medium rotatably accomodated therein and having an opening for exposing at least a portion of a signal recording region of said disk shaped recording medium;
a shutter movably mounted on said main body for opening and closing said opening;
a torsion coil spring mounted in said main body with a first arm section engaging a portion of said main body and a second arm section engaging a spring engaging portion of said shutter, said torsion coil spring biasing said shutter towards its closed position;
an insertion opening for said torsion coil spring on the front edge of said main body; and
first control means comprising a first rib projecting from the inside of one of the cartridge halves towards the other half and bordered by said recess for controlling the movement of said second arm section of the coil spring parallel to the major surfaces of said two halves during flexure of the coil spring which brings said second arm section into engagement with said spring retaining portion of said shutter;
characterised by second control means comprising a second rib spaced from said first rib and projecting from the inside of the same cartridge half as said first rib for controlling the position of said second arm section of the coil spring across the depth of said main body.

With the above described disk cartridge, after the torsion coil spring having its arm sections resiliently flexed apart is introduced into the cartridge main body through the insertion opening in the main body of the cartridge, the manual pressure on the arm section adapted for engaging with the shutter is released and the latter arm section moves to engage with the shutter. During this time, the movement of the arm section along the height and the major surface of the cartridge main body is controlled by movement controlling means.

Also, with the other arm section engaging with the shutter, the shutter is biased by the torsion coil spring for closing the openings in which the disk shaped recording medium is rotatably accommodated and which is adapted for exposing the signal recording area of the disk shaped recording medium towards outside.

The invention will be further described by way of non-limitative example with reference to the accompanying drawings, in which:-
Figure 1 is an overall perspective view of a disk cartridge according to the present invention.
Figure 2 is an exploded perspective view of the disk cartridge shown in figure 1.
Figure 3 is an overall perspective view of a shutter mounted to the cartridge main body.
Figure 4 is a front view showing a spring retainer of the shutter.
Figure 5A is a side elevational view of a torsion coil spring.
Figure 5B is a plan view thereof.

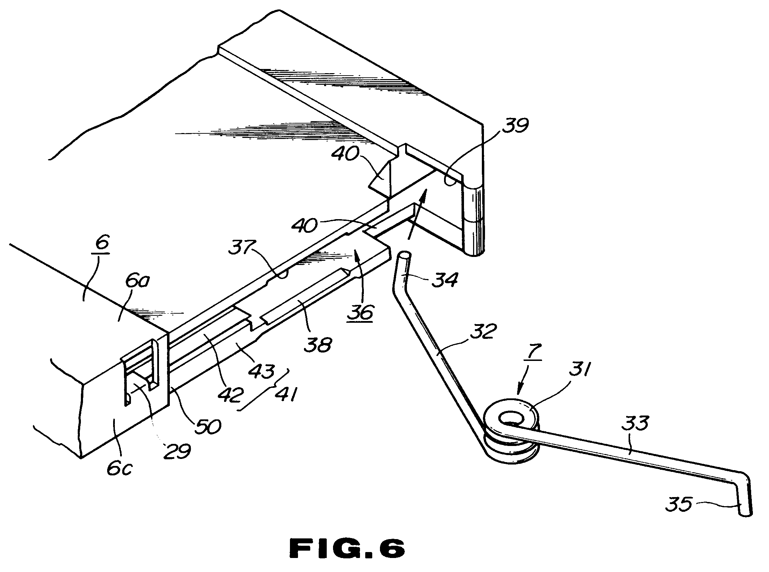

Figure 6 is a perspective view showing the state in which one arm section of the torsion coil spring is engaged with the spring retainer.
Figures 7A and 7B are perspective views showing the state of inserting the torsion coil spring into the cartridge main body.
Figure 8 is a perspective view showing the state in which the torsion coil spring is installed between the shutter and the cartridge main body.
Figure 9 is a cross-sectional view showing the state in which the bent retaining end of the arm section of the torsion coil spring is engaged with the retainer provided in the shutter.
Figure 10 is a plan view, looking from the upper half, and showing the state in which the shutter is moved to a position of closing the data signal writing and reading openings and the central opening.
Figure 11 is a plan view similar to figure 10 but looking from the lower half.
Figure 12 is a plan view looking from the upper half, and showing the state in which the shutter is moved to a position of opening the data signal writing and reading openings and the central opening.
Figure 13 is a plan view similar to figure 12 but looking from the lower half.

In the present described embodiment, the present invention is applied to a disk cartridge containing a magneto-optical disk as a disk shaped recording medium.

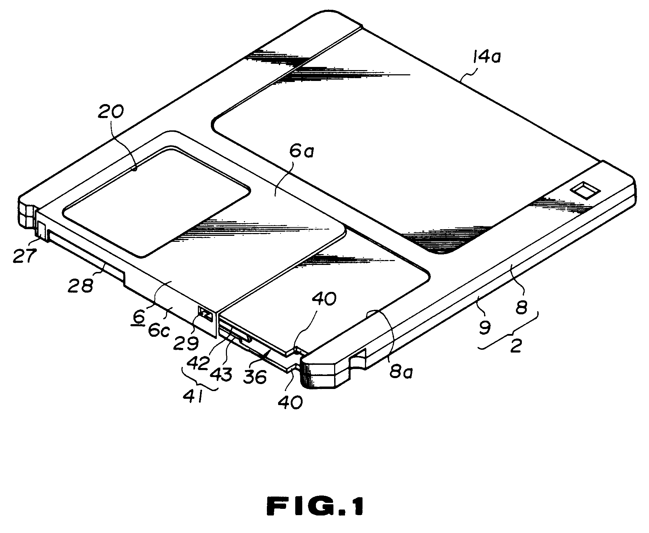

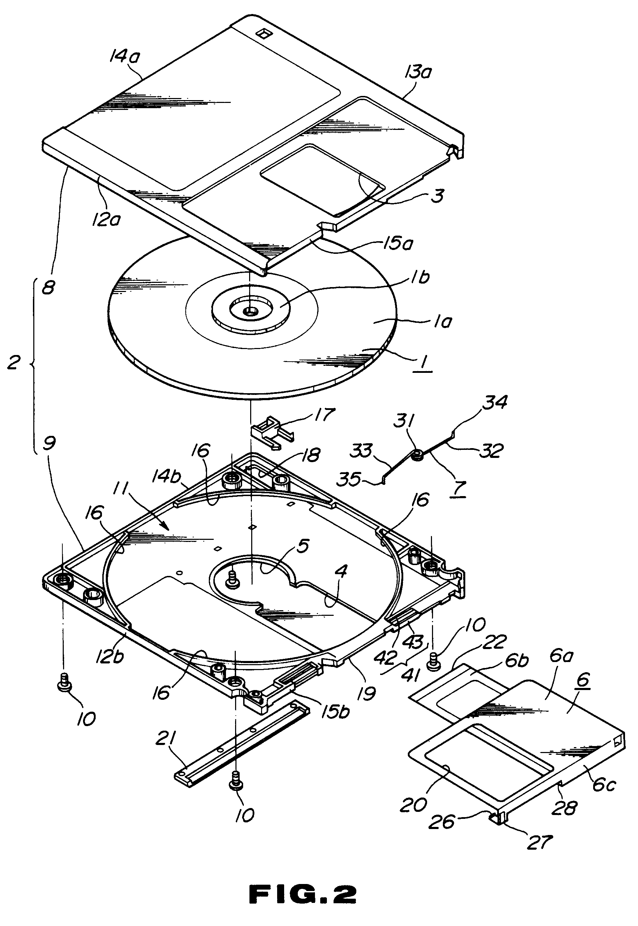

Referring to figures 1 and 2, the disk cartridge according to the present invention includes, as main components, a disk shaped magneto-optical disk, a main cartridge body 2 rotatably accommodating the magneto-optical disk 1, a shutter 6 movably mounted on the cartridge main body 2 and adapted for closing data signal writing and reading openings 3, 4 provided in the cartridge main body 2 for exposing a signal recording area 1a of the disk 1 to outside and a central opening 5 which causes a centre hub lb at the centre of the disk 1 to be exposed to outside and by means of which a disk table of a disk driving device is intruded into the cartridge main body, and a torsion coil spring 7 which is provided within the cartridge main body 2 and which operates to bias the shutter 6 in a direction of closing the openings 3, 4 and 5.

The magneto-optical disk 1 includes a disk base plate or substrate which exhibits certain stiffness and is formed of polycarbonate resin or glass and on the major surface of which a signal recording layer is formed. The disk 1 has a sufficient thickness as compared with a magnetic sheet disk.

Referring to figure 2, the cartridge main body 2 accommodating the magneto-optical disk 1 is composed of an upper half 8 and a lower half 9, in the form each of a substantially rectangular flat plate, which are abutted to each other and interconnected by a plurality of set screws 10. This cartridge main body 2 is of sufficient thickness to form a disk containing section 11 therein which is sufficient to rotatably accommodate the magneto-optical disk 1 of the larger thickness. To this end, there are formed, on the outer peripheral sides of the upper and lower halves 8, 9 making up the cartridge main body 2, side wall sections 12a, 12b, 13a, 13b constituting left and right side walls 12 and 13 of the cartridge main body 2, rear side wall sections 14a, 14b constituting a rear wall 14 of the cartridge main body 2, and front side wall sections 15a, 15b constituting a front wall 15 of the cartridge main body 2. Within the interior of the main cartridge body 2, there is formed the disk containing section 11 delimited by an arcuate peripheral wall for safeguarding the magneto-optical disk 1 in the cartridge main body 2 against possible contact with the torsion coil spring 7 in the main cartridge body 2 and also for assuring smooth rotation of the disk 1. Thus, arcuate upstanding wall sections 16 are formed at the registering positions on the inner peripheral surface of the upper and lower halves 8 and 9 of the cartridge main body 2, so that, when the upper and lower halves 8 and 9 are abutted on each other, the wall sections 16 also abut on each other to complete the above mentioned disk containing section 11.

On one corner of the rear wall 14 of the cartridge main body 2 is mounted an inadvertent recording inhibit member 17 adapted for selecting if data signals can be written on the magneto-optical disk 1. More specifically, the inadvertent recording inhibit member 17 is movably mounted with a portion thereof facing to an inadvertent recording inhibit detection opening 18 formed at a corner on the rear side wall section 14b of the lower half 9.

The data signal writing and reading openings 3, 4 are formed in the upper and lower sides of the cartridge main body 2, respectively. That is, the data signal writing and reading openings 3, 4 and formed in the upper and lower halves 8, 9 respectively. These openings 3, 4 are substantially rectangular and formed at the centre in the left-to-right direction of the cartridge main body 2 for extending from the front side wall 15 towards the vicinity of the centre of the cartridge main body 2. The central opening 5 is formed only in the lower half 9 at a position in register with the centre hub 1b of the magneto-optical disk 1 accommodated in the main cartridge body 2. The central opening 5 is substantially circular and formed in contiguity to the data writing and reading opening 4.

The disk cartridge of the present embodiment is designated for magneto-optical applications, so that, when the disk cartridge is mounted in position within the recording/reproducing apparatus, the data signal writing and reading opening 3 formed in the upper half 8 is confronted by the magnetic head, while the data signal recording and reading opening 4 formed in the lower half 8 is confronted by a pickup device adapted for irradiating the signal recording surface of the magneto-optical disk 1 with the light beam. On the outer lateral side of the lower half 9, at the front end face of the data signal recording and reading opening 4 formed in the lower half 9, there is formed a recess 19 by means of which the optical pickup device may be intruded into the cartridge main body 2 in opposition and in close proximity to the surface of the magneto-optical disk 1.

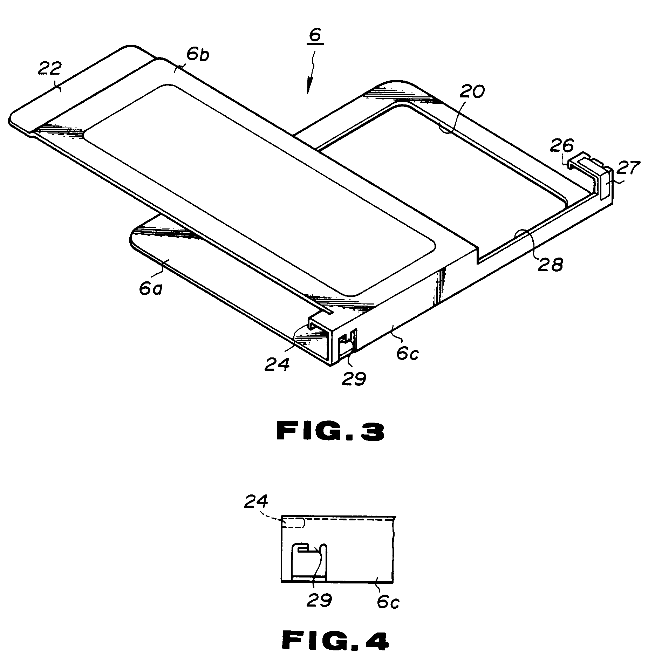

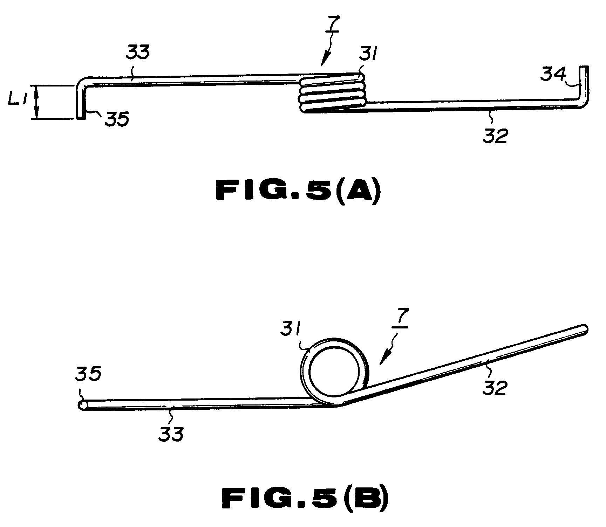

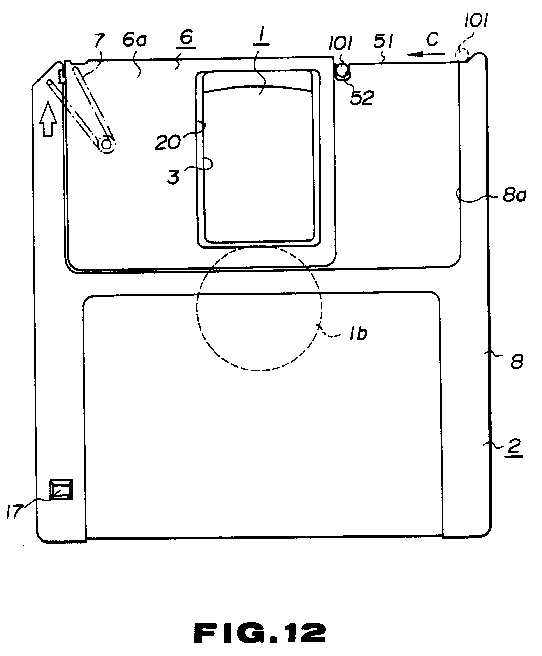

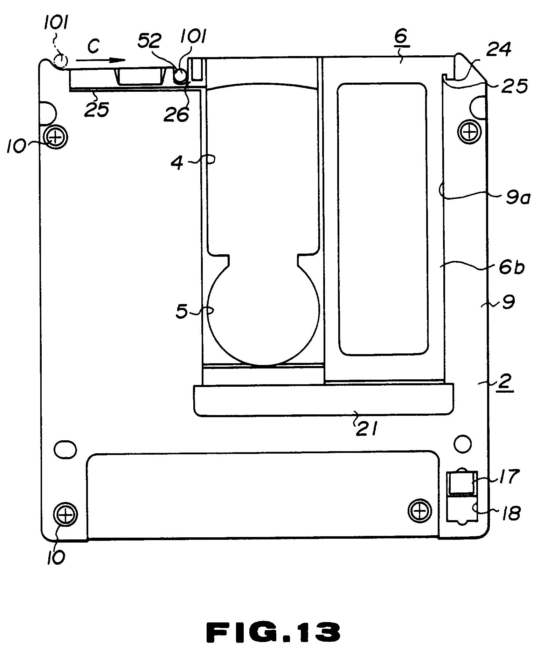

The shutter 6 is formed by punching and bending a thin metal plate, such as a thin stainless steel plate, into the cross-sectional shape of a letter U, as shown in figure 3 and 4. This shutter 6 is comprised of a first shutter section 6a for closing the data signal writing reading opening 3 in the upper half 8, a second shutter section 6b for closing the data signal recording and reading opening 4 and the central opening 5 in the lower half 9 simultaneously, and a connecting plate 6c for interconnecting the first and second shutter sections 6a, 6b. As shown in figure 5, the first shutter section 6a of the shutter 6 is in the form of a transversely wide rectangle and formed with a rectangular through-hole 20 adapted for opening the data signal recording and reading opening 3 when the shutter 6 is moved in the direction of opening the openings 3, 4 and 5. As shown in figure 4, the second shutter section 6b is in the form of a transversely narrow rectangle for closing the data signal writing and reading opening 4 and the central opening 5 in the lower half 9 simultaneously. The forward side of the second shutter section 6b is formed with a bent thrust portion 22 which is thrust and supported by a shutter retaining plate 21 mounted on the outer lateral side of the lower half 9 for preventing the second shutter section 6b from floating from the cartridge main body 2. On one lateral side of the second shutter section 6b connecting to the connecting section 6c, a first engaging pawl 24 engaging with a first slide guide groove 23 formed on the outer lateral side of the lower half 9 on attachment of the shutter 6 to the cartridge main body 2 is integrally formed for extending in the direction of the first shutter section 6a. The one end of the connecting plate 6c, not facing the second shutter section 6b, is formed with a slide guide section 27 on the end of which is formed a second engaging pawl 26 engaging with a second slide guide groove 25 when the shutter 6 is mounted on the cartridge main body 2. The second slide guide groove 25 is provided on the outer lateral side of the lower half 6 in parallel with the first slide guide groove 23. The connecting plate 6c interconnecting the first and second shutter sections 6a, 6b is slid in contact with the front side of the cartridge main body 2 to play the role of stably sliding the shutter 6. Thus the connecting plate 6c is formed with a width substantially equal to the thickness of the front side of the cartridge main body 2. As shown in figures 12 and 13, the connecting plate 6c is formed with a recess 28 which is of substantially the same shape as the recess 19 in the lower half 9 and which is at a position in register with the recess 19 when the shutter 6 is moved for opening the openings 3, 4 and 5. Similarly to the recess 19, the recess 28 is adapted to enable the optical pickup device to be intruded into the cartridge main body in proximity and opposition to the magneto-optical disk 1.

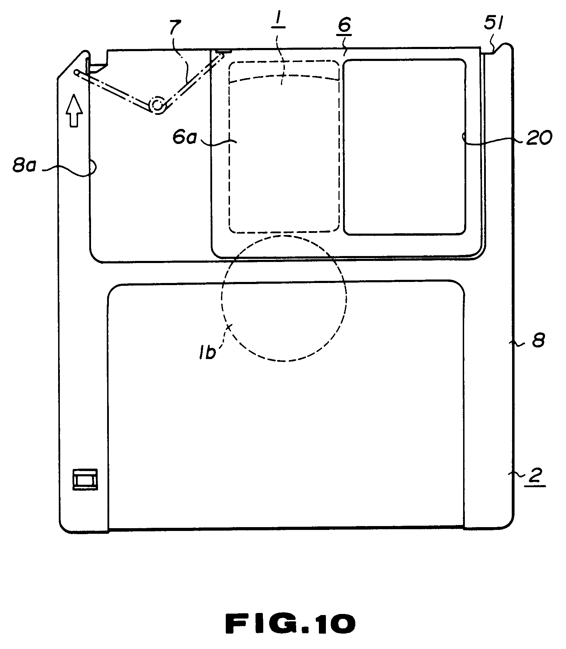

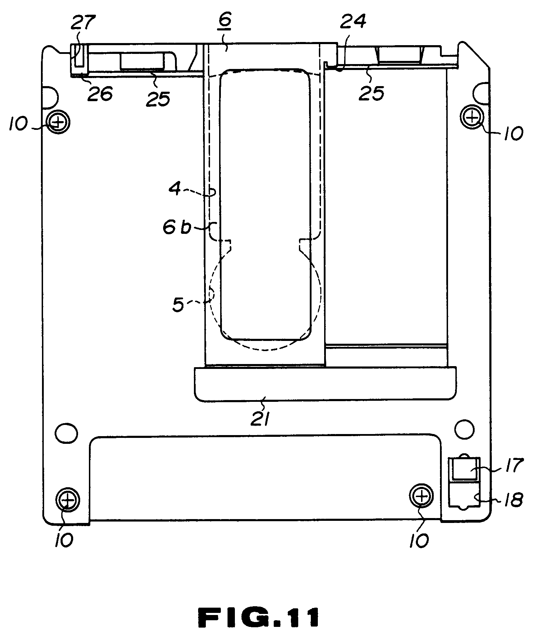

The connecting plate 6c is formed with a spring retainer 29 adapted for retaining the torsion coil spring 7. The spring retainer 29 is provided in the cartridge main body 2 and is adapted for retaining the torsion coil spring adapted in turn for biasing the shutter mounted on the cartridge main body 2 in the direction of closing the data signal writing and reading openings 3, 4 and the central opening 5 as shown in figures 10 and 11. This spring retainer 29 is provided at the side of the connecting plate 6c interconnecting the first and second shutter sections 6a, 6b and is bent towards the interior of the shutter 6 so as to run parallel to the first and second shutter sections 6a, 6b. The spring retainer 29 is formed substantially in the form of a letter L, as shown in figure 4.

The above described shutter 6 is mounted on the cartridge main body 2 by being fitted at the front side of the cartridge main body 2 with the first and second shutter sections 6a, 6b extending on the outer lateral sides of the upper and lower halves 7 and 9. At this time, the shutter 6 is mounted to the cartridge main body 2 by engaging in the first and second slide guide grooves 23, 25. The shutter 6 thus mounted on the cartridge main body 2 is moved, with the first and second engaging pawls 24, 26 being guided in the first and second slide guide grooves 23, 25, between a position shown in figures 10 and 11 of closing the data signal recording reading openings 3, 4 and the central opening 5 and a position shown in figures 12 and 13 of opening these openings 3, 4 and 5.

The regions of the cartridge main body 2 over which the first and second shutter sections 6a, 6b of the shutter 6 are extended and moved are formed as recesses in which the first and second shutter sections 6a, 6b are received flush with the outer lateral sides of the cartridge main body 2.

Meanwhile, when the shutter 6 is fitted to the cartridge main body 2, the thrust portion 22 on the foremost part of the first shutter section 6b is intruded along the side of the lower surface of the shutter retaining plate 21 so as to be thrust and supported by the plate 21. With the thrust portion 22 being thrust and supported by the shutter retaining plate 21, it becomes possible to present the shutter 6 from being floated from the cartridge main body 2 to assure a stabilised sliding movement of the shutter 6.

The torsion coil spring 7 for biasing the shutter 6 is formed by forming several helical turns in a stainless steel wire for forming a coil section 31 from both ends of which a pair of arm sections 32 and 33 are extended in the tangential direction of the coil section 31. The ends of the arm sections 32, 33 are formed with retaining sections 34, 35 which are bent in opposite directions with a bending angle approximately equal to 90°. This torsion coil spring 7 is intruded into the cartridge main body 2 by means of a spring insertion opening 36 formed in the front side of the main cartridge body 2.

As shown in figure 1 the spring insertion opening 36 is formed on the front side of the cartridge main body 2 mounting the shutter 6 and at a position in which it is opened when the shutter 6 is moved to the position of closing the data signal writing and reading openings 3, 4 and the central opening 5.

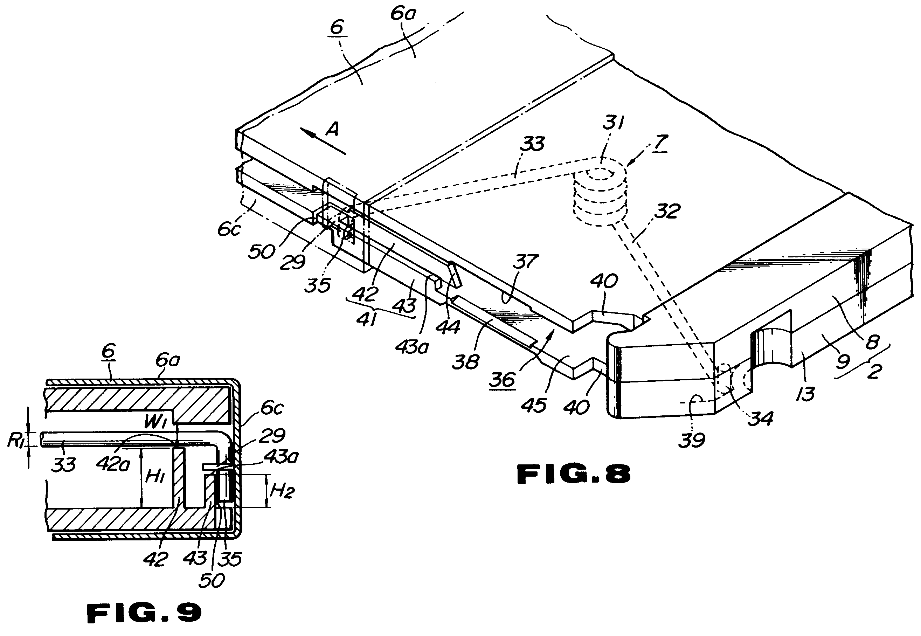

That is, the opening 36 is formed, as shown in figures 1 and 8, towards the other side wall 13 of the cartridge main body 2 by partially removing the front wall 15 of the cartridge main body 2. In other words, as shown in figures 1 and 2, the front wall sections 15a, 15b of the upper and lower halves 8 and 9 are interrupted at the spring inserting opening 36. On the confronting inner lateral sides of the opening 36, inclined guide surfaces 37, 38 are formed for delimiting the inserting position of the coil section 31 inserted into the cartridge main body 2.

On the side of the opening 36 towards the other side wall 13, a relief section 40 is formed across the upper and lower halves 8 and 9 to permit the bent retaining end 34 of the arm section 32 of the torsion coil spring 7 to be inserted into the cartridge main body 2 into engagement with a spring retainer 39 provided on the front side corner of the upper half 8. The spring retainer 39 is formed as an engaging recess on the front side corner of the upper half 8.

On the front side of the cartridge main body 2, there is provided a spring movement controlling section 41 in contiguity to the spring inserting opening 36, as shown in figures 1 and 8. The controlling section 41 causes the arm section 32 of the torsion coil spring 7 to be resiliently shifted into engagement with the spring retainer 29 of the shutter 6 when the coil spring 7 is introduced into the main cartridge body 2. The controlling section 41 is constituted by a height controlling rib 42 for controlling the position along the thickness of the cartridge main body 2 of the arm section 33 of the torsion coil spring 7 introduced into the main cartridge body 2 and a horizontal movement controlling rib 43 for controlling the movement of the arm section 33 along the major planar surface of the cartridge main body 2. These controlling ribs 42, 43 are protruded on the front side of the lower half 9 in parallel with each other with a horizontal length extending from near the end of the data signal writing and reading opening 4 to a mid portion of the spring inserting opening 36.

The height controlling rib 42 has its foremost part projecting from the foremost part of the horizontal movement controlling rib 43 towards the spring inserting opening 36. This projecting portion of the rib 42 towards the spring inserting opening 36 is formed with an inclined guide surface 44 for guiding the resiliently shifted arm section 33 of the torsion coil spring so as to lie on the upper surface of the height controlling rib 42.

The height controlling rib 42 has such a height that the arm section 33 of the torsion coil spring 7 resting on the upper surface of the height controlling rib 42 is not deviated markedly along the thickness of the main cartridge body 2. That is, as shown in figure 9, the position controlling rib 42 is formed with a height H₁ such that a distance W₁ between the top of the rib 42 and the inner surface of the upper half 8 is approximately equal to the thickness R₁ of the arm section 33 of the torsion coil spring 7.

The horizontal movement controlling rib 43 is formed with a height H₂ such that the spring retainer 29 formed integrally with the connecting plate 6c of the shutter 6 may be moved along a upper end surface 43a of the rib 43. In other words, the height H₂ is so selected as to permit movement of the spring retainer 29 which is formed at about the centre along the thickness of the connecting plate 6c of the shutter 6 integrally therewith for extending towards the inside of the cartridge main body 2. The height controlling rib 42, which is formed at a higher position than the horizontal rib 43, is receded towards the inner side of the main cartridge body 2 so that the rib 42 is not abutted by the foremost part of the spring retainer 29 which is protruded towards the inside of the cartridge main body 2. The bent retaining end 35 of the arm section 33 of the torsion coil spring 7 has a length L₁ such that, when the arm section 33 rests on an upper end face 42a of the height controlling rib 42, the bent retaining section 35 may be engaged with the horizontal movement controlling rib 43.

On the front side of the lower half 9, formed with the horizontal controlling rib 43, there is formed a recess 50 to permit movement of the bent retaining and 35 of the torsion coil spring 7.

The state in which the torsion coil spring 7 is introduced into the cartridge main body 2 so as to be installed between the spring retainer 39 in the cartridge main body 2 and the spring retainer 29 of the shutter 6, is hereinafter explained.

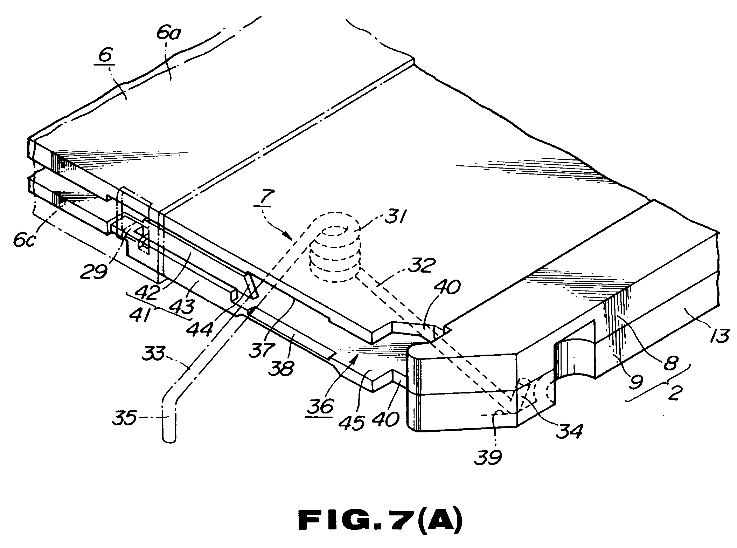

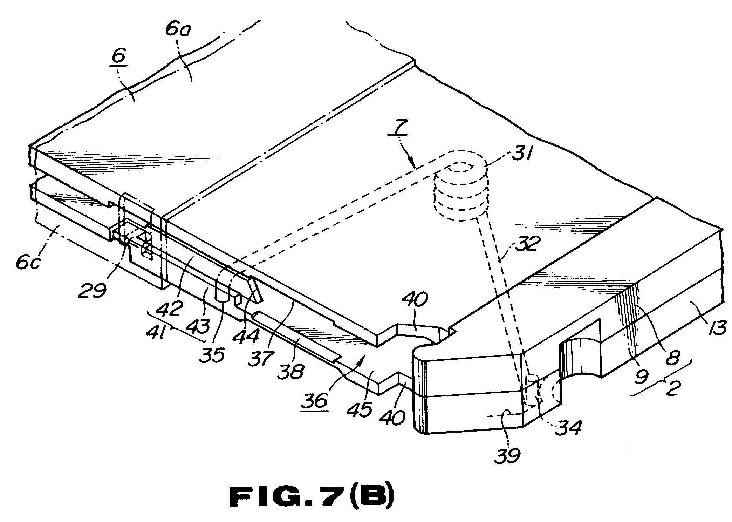

For introducing the torsion coil spring 7 into the inside of the main cartridge body 2, the bent retaining end 34 of the arm section 32 is positioned in the vicinity of the relief section 40 of the main cartridge body 2. The bent retaining end 34 is introduced into the cartridge main body 2 from the opening end of the spring insertion opening 36, as the retaining end 34 is twisted, until the end 34 is engaged with the spring retainer 39, as shown in figure 7A. The arm section 33 is thrust manually so that the arm sections 32, 33 are resiliently closed on each other. The coil section 31 of the torsion coil spring 7 is placed in proximity to the inclined guide surfaces 37, 38 of the spring inserting opening 36 and is introduced into the inside of the main cartridge body 2 by way of these inclined guide surfaces 37, 38. The torsion coil spring 7 in its entirety is progressively introduced into the cartridge main body 2. Thus the torsion coil spring 7 is introduced into the cartridge main body 2 until the bent retaining end 35 of the arm section 33 confronts the terminal ends of the position controlling rib 42 and the horizontal controlling rib 43. When the thrust state of the arm section 33 is released, the arm section 33 is shifted in a direction shown by an arrow A in fig 8 under the resiliency of the torsion coil spring 7. At this time, the arm section 33 rides on the upper end face 42a of the height controlling rib 42 as it is guided by the inclined guide surface 44 of the height controlling rib 42. The bent retaining end 35 of the arm section 33 engages with the front surface of the horizontal movement controlling rib 42, as shown in figure 7B. With the bent engaging end 35 thus engaging with the horizontal movement controlling rib 42, the arm section 33 is prohibited from being resiliently shifted towards the interior of the cartridge main body 2 in the horizontal direction of the cartridge main body 2 when the torsion coil spring 7 is resiliently restored towards its extended position. The arm section 33 is progressively shifted in the direction of the arrow A in figure 8, as it is prohibited by the horizontal movement controlling rib 42 from being moved towards the interior of the cartridge main body 2, until the bent retaining end 35 is engaged with the spring retainer 29 of the shutter 6 mounted on the cartridge main body 2, as shown in figures 8 and 9, for biasing the shutter 6 in the direction of the arrow A in figure 8. The shutter 6, thus biased by the torsion coil spring 7, is maintained at a position of closing the data signal recording and reading openings 3, 4 and the central opening 5, as shown in figures 10 and 11.

Thus the torsion coil spring 7 is installed between the cartridge main member 2 and the shutter 6, with the bent retaining end 34 of the arm section 32 being retained by the spring retainer 39 in the cartridge main body 2 and the bent retaining end 35 of the other arm section 33 being retained by the spring retainer 29 of the shutter 6, so that the shutter 6 is biased in the closure direction under the biasing force of extending the arm sections 32, 33 apart from each other.

It will be noted that, when the disk cartridge is introduced into the recording/reproducing apparatus, the shutter 6 is actuated by a shutter opening and closure unit of the recording/reproducing apparatus for opening the data signal recording and reading openings 3, 4 and the central opening 5 against the bias of the torsion coil spring 7. That is, as the disk cartridge is progressively introduced into the recording/reproducing apparatus from the front side thereof mounting the shutter 6, a shutter opening and closing pin 101 constituting the shutter opening and closing unit of the recording/reproducing apparatus is engaged with the end of a sliding recess 51 for the shutter opening and closing pin 101 which is formed on the front side of the cartridge main body 2. As the disk cartridge is further introduced into the inside of the recording/reproducing apparatus, the shutter opening and closing pin 101 is moved in the direction shown by an arrow C in figures 12 and 13. The shutter is moved against the bias of the shutter opening and closing pin 111 for opening the data signal recording reading openings 3, 4 and the central opening 5 as shown in figures 12 and 13. Meanwhile, after shifting the shutter 6 to its open position, the pin 101 snaps into an engaging recess 52 formed on the front side of the cartridge main body 2 to maintain the shutter 6 in the above mentioned open position.

Although the present invention is applied in the above embodiment to a disk cartridge accommodating a magneto-optical disk, it is to be noted that the present invention may be broadly applied to a disk cartridge adapted to bias a shutter with the aid of a torsion coil spring.

With the disk cartridge of the present invention, after the torsion coil spring having a pair of arm sections thereof resiliently thrust in the direction of being closed one on the other is introduced at the insertion opening provided in the cartridge main body, the arm section operatively associated with the shutter is released from thrusting, whereby the latter arm section is shifted in the direction of positively engaging with the spring retainer of the shutter at the same time that the movement of the latter arm section in the horizontal direction and that along the thickness of the cartridge main body are controlled in the above described manner.

With the latter arm section engaging with the shutter, the shutter is biased by the torsion coil spring to close the openings of the cartridge main body which are adapted for exposing the signal recording area of the disk shaped recording medium towards outside.

As described hereinabove, it becomes possible with the disk cartridge of the present invention to control the direction of movement of the arm sections of the torsion coil spring which is produced by the resilient restoring force of the torsion coil spring to permit the arm section to be engaged positively with the retainer of the shutter. In addition, the torsion coil spring can be mounted reliably both by manual operation or with the aid of an automatic assembly system.

## Claims

1. A disk cartridge comprising:
a main body (2) including an upper half (8) and a lower half (9), said halves (8,9) each having a major surface and one of the halves having a recess at least partially along its front edge, said main body (2) having a disk shaped recording medium (1) rotatably accomodated therein and having an opening (3,4) for exposing at least a portion of a signal recording region (1a) of said disk shaped recording medium (1);
a shutter (6) movably mounted on said main body (2) for opening and closing said opening (3,4);
a torsion coil spring (7) mounted in said main body (2) with a first arm section (32) engaging a portion of said main body and a second arm section (33) engaging a spring engaging portion (29) of said shutter (6), said torsion coil spring (7) biasing said shutter (6) towards its closed position;
an insertion opening (36) for said torsion coil spring (7) on the front edge of said main body (2); and
first control means (43) comprising a first rib projecting from the inside of one of the cartridge halves towards the other half and bordered by said recess for controlling the movement of said second arm section (33) of the coil spring (7) parallel to the major surfaces of said two halves (8,9) during flexure of the coil spring (7) which brings said second arm section (33) into engagement with said spring retaining portion (29) of said shutter;
characterised by second control means (42) comprising a second rib spaced from said first rib and projecting from the inside of the same cartridge half as said first rib for controlling the position of said second arm section (33) of the coil spring (7) across the depth of said main body (2).

2. A disk cartridge according to claim 1, wherein the first control means (43) are adapted to engage with a bent retaining end (35) of said second arm section (33) to control the extent of movement of said second arm section (33).

## Patentansprüche

1. Plattenkassette mit
- einem Hauptkörper (2), der eine obere Hälfte (8) und eine untere Hälfte (9) umfaßt, wobei diese Hälften (8, 9) jeweils eine Hauptfläche aufweisen und eine der Hälften mindestens an einem Teil ihres vorderen Rands eine Aussparung aufweist, und wobei im Hauptkörper (2) ein scheibenförmiges Aufzeichnungsmedium (1) drehbar angebracht ist und der Hauptkörper (2) eine Öffnung (3, 4) aufweist, durch die mindestens ein Teil eines Signalaufzeichnungsbereichs (1a) des scheibenförmigen Aufzeichnungsmediums (1) zugänglich ist,
- einem am Hauptkörper (2) bewegbar angebrachten Verschluß (6) zum Öffnen und Schließen der Öffnung (3, 4),
- einer am Hauptkörper (2) angebrachten Drehfeder (7) mit einem ersten Armabschnitt (32), der in einen Abschnitt dieses Hauptkörpers eingreift, sowie einem zweiten Armabschnitt (33), der in einen Federhalteabschnitt (29) des Verschlusses (6) eingreift, wobei diese Drehfeder (7) den Verschluß (6) in Richtung seiner Schließstellung drückt,
- einer sich am vorderen Rand des Hauptkörpers (2) befindenden Einsetzöffnung (36) für die Drehfeder (7), sowie
- einem ersten Führungsmittel (43), das eine ersten Rippe, die von der Innenseite einer der Kassettenhälften zur anderen Hälfte hinragt und an die die genannte Aussparung angrenzt, umfaßt und den zweiten Armabschnitt (33) der Drehfeder (7) parallel zu den Hauptflächen der beiden Hälften (8, 9) führt, wobei die Drehfeder (7) gespannt ist, was den zweiten Armabschnitt (33) mit dem Federhalteabschnitt (29) des Verschlusses (6) in Eingriff bringt,
gekennzeichnet durch
ein zweites Führungsmittel (42), das eine in einem Abstand zur ersten Rippe angeordnete und von der Innenseite derjenigen Kassettenhälfte, die die erste Rippe aufweist, wegragende zweite Rippe umfaßt und die Position des zweiten Armabschnitts (33) der Drehfeder (7) in Bezug auf die Höhe des Hauptkörpers (2) bestimmt.

2. Plattenkassette nach Anspruch 1, bei der das erste Führungsmittel (43) so ausgebildet ist, daß es mit einem umgebogenen Halteende (35) des zweiten Armabschnitts (33) in Eingriff gelangt, wodurch das Ausmaß der Bewegung des zweiten Armabschnitts (33) bestimmt wird.

## Revendications

1. Cassette à disque comprenant :
- un corps principal (2) comprenant une moitié supérieure (8) et une moitié inférieure (9), lesdites moitiés (8, 9) ayant chacune une surface principale et l'une des moitiés ayant un évidement au moins partiellement le long de son bord frontal, ledit corps principal (2) ayant à l'intérieur un support d'enregistrement (1) en forme de disque logé en rotation, et présentant une ouverture (3, 4) pour exposer au moins une partie d'une région d'enregistrement de signaux (1a) dudit support d'enregistrement en forme de disque (1) ;
- un volet de fermeture (6) monté de façon mobile sur ledit corps principal (2) afin d'ouvrir et de fermer ladite ouverture (3, 4) ;
- un ressort bobiné de torsion (7) monté dans ledit corps principal (2) avec un premier tronçon de bras (32) engageant une partie dudit corps principal et un second tronçon de bras (33) engageant une partie d'engagement de ressort (29) dudit volet (6), ledit ressort de torsion (7) repoussant ledit volet (6) en direction de sa position fermée ;
- une ouverture d'insertion (6) pour ledit ressort de torsion (7) sur le bord frontal dudit corps principal (2); et
- des premier moyens de commande (43) comprenant une première nervure qui se projette depuis l'intérieur de l'une des moitiés de cassette en direction de l'autre moitié et en bordure dudit évidement afin de commander le mouvement dudit second tronçon de bras (33) du ressort bobiné (7) parallèlement aux surfaces principales desdites deux moitiés (8, 9) pendant la flexion du ressort (7), qui amène ledit second tronçon de bras (33) en engagement avec ladite partie de retenue de ressort (29) dudit volet de fermeture ;
caractérisée par des seconds moyens de commande (42) comprenant une seconde nervure espacée de ladite première nervure et se projetant depuis l'intérieur de la même moitié de cassette que ladite première nervure, afin de commander la position dudit second tronçon de bras (33) du ressort (7) le long de la profondeur dudit corps principal (2).

2. Cassette à disque selon la revendication 1, dans laquelle les premiers moyens de commande (43) sont adaptés pour s'engager contre une extrémité de retenue repliée (35) dudit second tronçon de bras (33) afin de commander l'étendue du mouvement dudit second tronçon de bras (33).
